# EUROPEAN PATENT APPLICATION

(11) **EP 2 486 784 A2**
(43) Date of publication of application: **15.08.2012**
(21) Application number: 12154975.2
(22) Date of filing: 10.02.2012
(51) Int. Cl.: A01G 9/12, A47G 7/02

(54) **Apparatus for plant cultivation**

(30) Priority: 14.02.2011 IT AP20110005 U; 21.10.2011 IT AP20110014 U
(71) Applicant: Marconi, Domenico, 63066 Grottammare (AP) (IT); Marconi, Gino, 63066 Grottammare (AP) (IT)
(72) Inventor: Marconi, Domenico, 63066 Grottammare (AP) (IT); Marconi, Gino, 63066 Grottammare (AP) (IT)
(74) Representative: Baldi, Claudio

(57) **Abstract**

The present invention relates to an apparatus for plant cultivation (2) in a pot (1), which comprises at least one net with quadrangular mesh (3) supported by a series of feet (8) provide with fixing and holding means for said at least one net (3).

## Description

The present patent for industrial invention relates to an apparatus for plant cultivation.

In the farming sector a still unsolved problem consists in the lack of a suitable anti-overturning support for plants during growing.

Available solutions consist in arranging plants in pots in sheltered locations, which are not always available, to protect them from the action of the wind or, more simply (being the most common system), arranging plants in pots in an open field in rows with wooden or metal pickets driven directly into the ground.

Said pickets support strings disposed in parallel direction to the resting surface, which enclose the foliage of the plants at the predefined height in order to prevent them from overturning under the action of the wind. Apart from being rather cumbersome, this system is impaired by the fact that it restrains the foliage of the plant, which instead needs light and air in order to prevent leaves from falling. Moreover, when necessary for cultivation reasons (pruning, selection, etc.) the extraction and rearrangement of the pots in the row are rather difficult.

An anti-overturning system that has recently become popular consists in using metal grids disposed at a suitable height from the ground, in such manner to create a series of square meshes similar to alveoli where plants in pots are arranged, it being impossible to overturn them even in the presence of a lateral stress.

The main problem of such a solution consists in keeping the reticular structure raised at the predefined height. Such a problem is empirically solved by laying the net on concrete or tuff blocks, so that the grid is not anchored to the supports.

Moreover, the meshes in correspondence of the supports cannot be used to position pots.

A more sophisticated system consists in adopting reticular panels with U or V-shaped bends acting as support in such manner that the reticular structure is raised from the ground. However, such a system is impaired by the fact that the cost of the reticular panels is considerably high due to the additional work that is necessary to obtain such bends. Moreover, it is impaired by the fact that the bearing structure is in contact with the supporting surface (ground), which is often soaked with irrigation water and/or fertilizing products that are highly corrosive, with negative consequences for the life of said panels.

The purpose of the present invention is to devise an apparatus for plant cultivation able to remedy the aforementioned drawbacks.

A further purpose of the present invention is to minimize the volume of the apparatus of the invention during storage and transportation.

The invention consists in the adoption of special plastic supports provided on top with notches adapted to receive the wires of one or more electrowelded metal nets of commercial type, each of them being composed of metal sections (WIRES) intersected by preferably 90°. So, the net is raised from the supporting surface and pots with plants are inserted in its meshes, in such manner to avoid overturning caused by wind or other transversal force.

The apparatus is modular and can be assembled on site, whereas nets can be disposed one next to the other one during transportation or storage.

Moreover, if one of the feet is damaged or worn out, it can be replaced rapidly.

Should it necessary, it is also possible to move the foot rapidly by positioning it in another point of the net.

Therefore, the aforementioned drawbacks are solved.

Supports are composed of molded plastic sections mounted perpendicularly to the surface of the net and firmly fixed to it in correspondence of the 90° intersections of the wires of the net by means of a plastic plug screwed onto said suitably threaded support.

Such a coupling is very firm, in spite of being composed of heterogeneous elements.

Moreover, it makes it possible to use all squares of the net because said supports are positioned in correspondence of the intersection of the wires.

Additionally, it is possible to change the number of supports on each panel (minimum 6) according to the transversal and longitudinal rigidity to be obtained, as well as arrange the net at a different height with respect to the height of the pots, by changing the length of the supports.

For economic reasons the metal net can be made of untreated wires or, for longer life and better aesthetics, of stainless steel or plastic-coated hot-galvanized wires.

With such a system, in case of strong wind conditions, it is possible to assemble two nets to obtain a more rigid and more resistant structure to enclose the pot.

For explanatory reasons, the description of the invention continues with reference to the attached drawings, which only have an illustrative, not limiting value, wherein:
- Figures 1 and 2 are two axonometric views of the apparatus of the invention;
- Figure 3 is an exploded axonometric view of the foot supporting a quadrangular-meshed net;
- Figure 4A is an exploded axonometric view of the foot of Fig. 3 with two fixing means used to connect and support two identical quadrangular-meshed nets.
- Figures 4B and 4C are respectively an axonometric view and a side view partially sectioned along a vertical plane of the apparatus of the invention with two feet as the ones of Fig. 4A in operating condition.
- Figure 5A is an exploded axonometric view of the foot according to another constructive embodiment, with two fixing means used to connect and support two identical quadrangular-meshed nets.
- Figures 5B and 5C are respectively an axonometric view and a side view partially sectioned along a vertical plane of the apparatus of the invention with two feet as the ones of Fig. 5A in operating condition.
- Figure 6 is an exploded axonometric view of the foot supporting a quadrangular-meshed net according to a further constructive embodiment;
- Figure 7 is an exploded axonometric view of the foot of Fig. 6 with two fixing means used to connect and support two identical quadrangular-meshed nets.
- Figure 8 is an exploded axonometric view of the foot supporting a quadrangular-meshed net according to a further constructive embodiment;
- Figure 9 is an exploded axonometric view of the foot of Fig. 8 with two fixing means used to connect and support two identical quadrangular-meshed nets.
- Figures 10 and 11 are two exploded axonometric views of the foot provided with a special knob used to support a quadrangular-meshed net.

Referring to the enclosed figures, the apparatus for plant cultivation comprises:
- at least one pot (1) adapted to contain a plant (2); said pot (1) having maximum horizontal length (D) and height (H);
- a first quadrangular-meshed net (3), which is provided with a first series (4) of parallel wires (41) and a second series (5) of parallel wires (51) intersecting with the wires (41) of the first series (4), in such manner to define a series of intersecting points (6) between the wires (41,51) of the two series (4,5) and a series of meshes (7); said pot (1) being inserted into a mesh (7) of said quadrangular-meshed net (3);
- at least three feet (8) adapted to support said first quadrangular-meshed net (3).

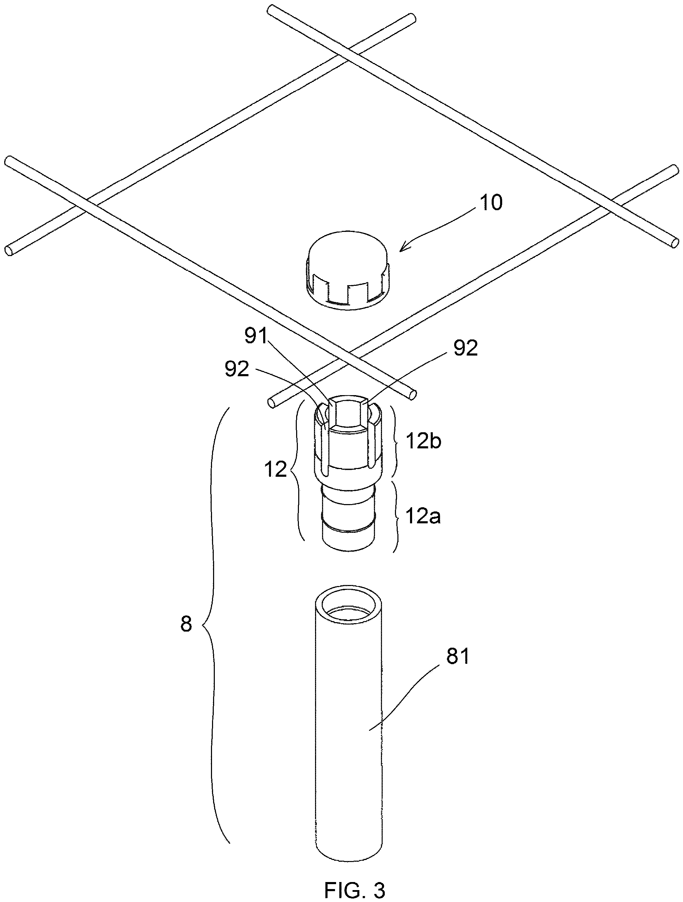

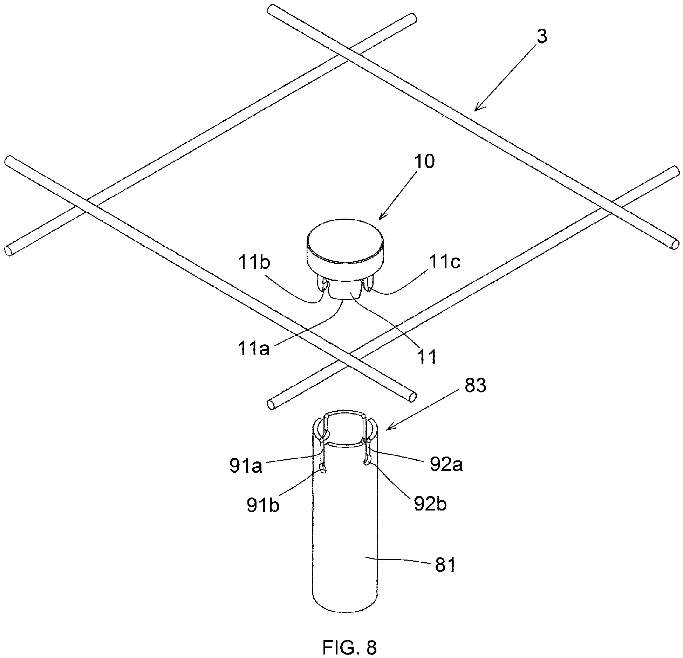

The peculiarity of said apparatus consists in the fact that each foot (8) is provided with:
- a tubular body (81) provided with lower end (82) and upper end (83); said foot (8) having height (h) lower than the height (H) of the pot (1);
- first fixing means situated at the upper end (83) of said tubular body (81) and fixed to the quadrangular-meshed net (3) in correspondence of one of the intersection points (6), as shown in Figs. 3, 6, 8.

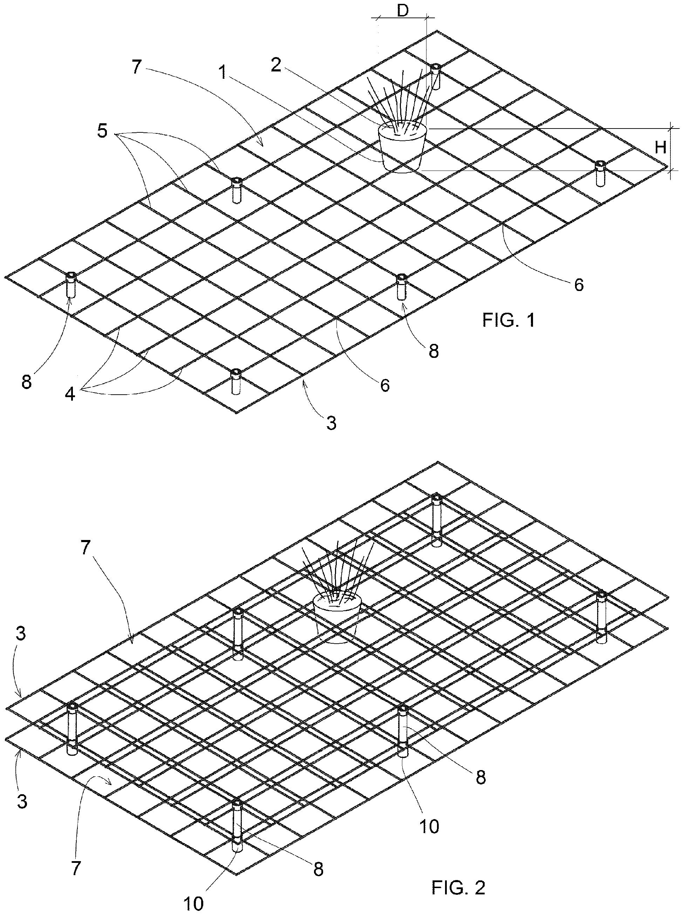

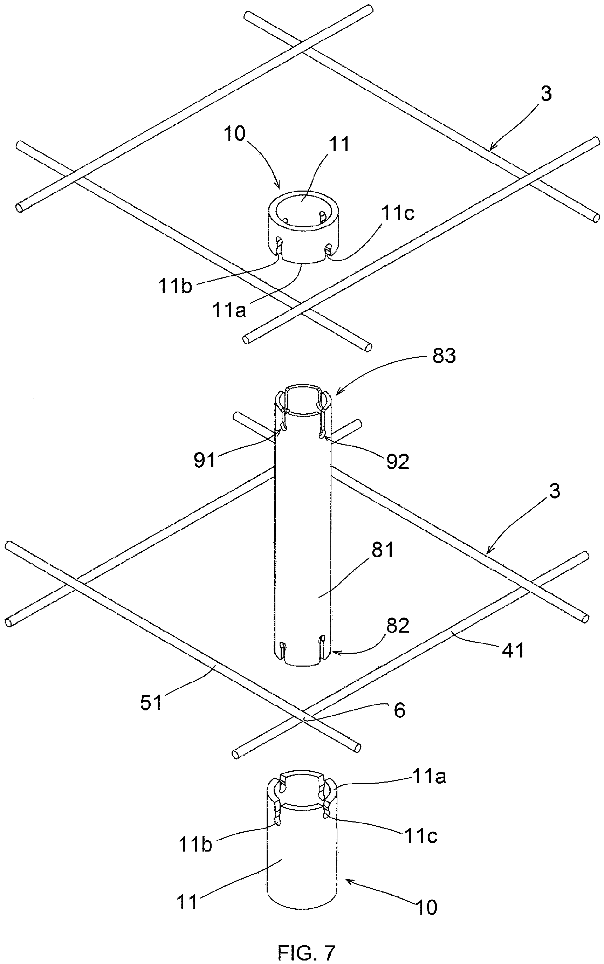

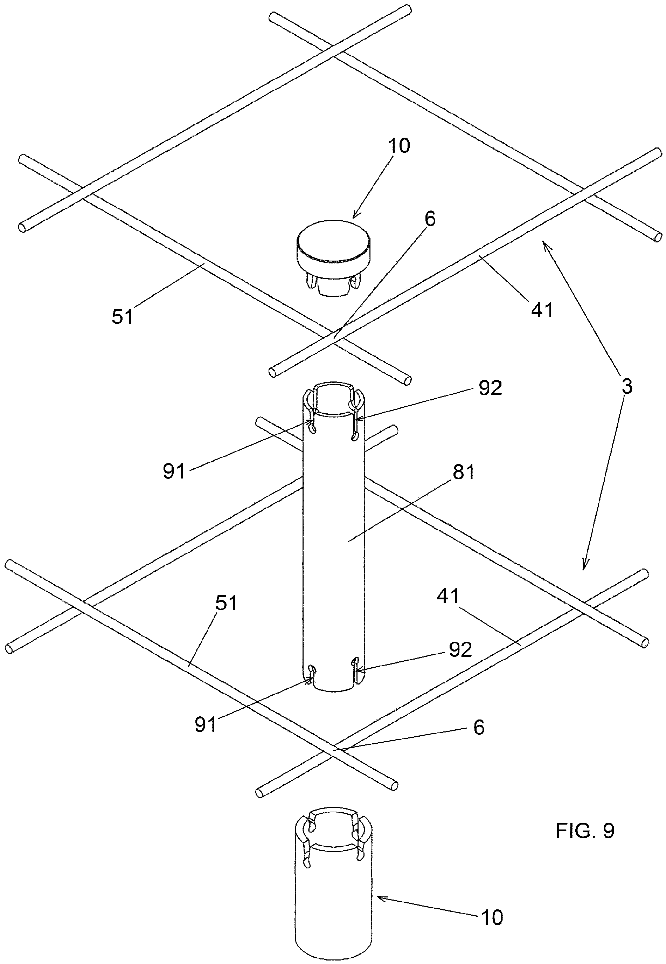

Referring to Figs. 2, 4A, 4B, 4C, 5A, 5B, 5C, 7, 9, 10 and 11 the apparatus of the invention also comprises a second quadrangular-meshed net (3), parallel to the first net (3) and connected to it by means of the foot (8) provided with second fixing means in correspondence of the lower end (82) of said tubular body (81) and fixed to the second quadrangular meshed-net (3) in correspondence of one of the intersection points (6).

Because of said second net, the apparatus can guarantee that the pot (1) is not overturned or disposed in incorrect position.

In fact, it must be noted that plants with considerable height can be overturned by the wind; in such a case, the use of a single net does not prevent such a drawback, given the fact that the pot is tilted under the force of the wind, it moves the net laterally and it finally overturns.

On the contrary, because of the presence of the second net in the apparatus of the invention, which is positioned at a few centimeters from the resting surface where the pot (1) is situated, the pot (1) will not overturn, even in presence of strong wind.

Figs. 3 to 11 show several embodiments of the fixing means provided on the feet (8).

The fixing means provided in upper and lower position on the foot (8) may be identical or not.

Now referring to Figs. 3 to 9, said fixing means are two opposite pairs of longitudinal notches (91,92) in which a wire (41,51) of the first (4) or second series (5) of wires of the net (3) is inserted.

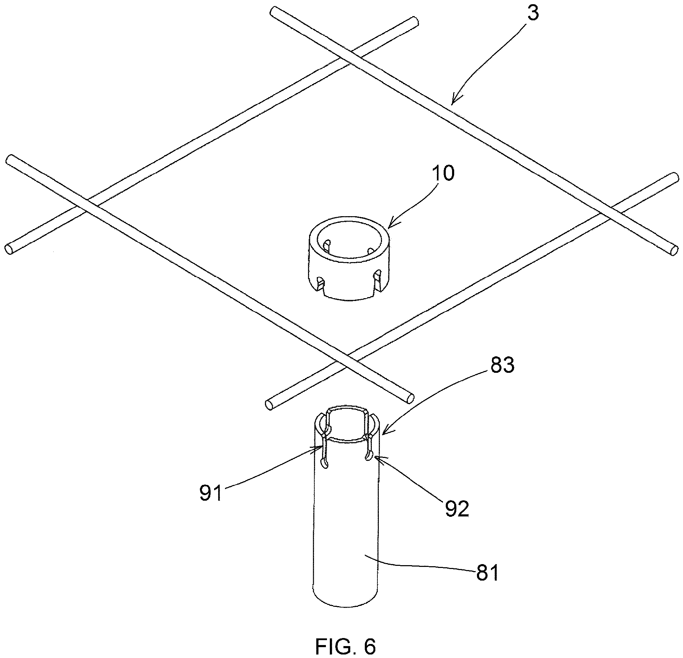

In Figs. 6, 7, 8, and 9 said longitudinal notches (91,92) have a first low-thickness section (91 a,92a) with width lower than the diameter of the wire (41,51), and a second section (91 b,92b) adapted to exactly receive the wire (41,51).

Such a special shape of the longitudinal notches (91,92) makes it possible to automatically stop the wire (41,51) as soon as, after crossing the first low-thickness section (91 a,92a), it reaches the second section (91 b,92b) consisting in its housing in operating condition.

In Figs. 3, 4A, 4B, 4C, 5A, 5B, 5C, 6 7, 8, 9, 10 and 11, said fixing means also comprise a cap (10) with collar (11) inserted inside or outside the upper or lower end (82,81) of the tubular body (81).

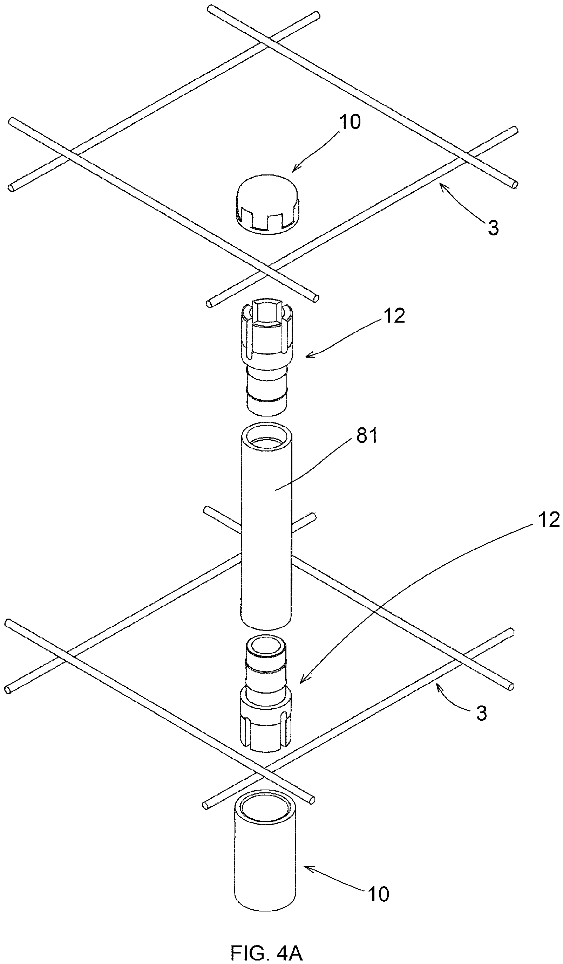

It must be noted that the cap (10) can be provided either in upper position on the tubular body (81), for aesthetic reasons, and in lower position on the tubular body (81) in such manner to act as base to raise the pair of nets (3); more precisely, in Figs. 4A, 4B, 4C, 5A, 5B, 5C, 7, 9, 10 and 11 said cap (10) is provide in lower position on the tubular body (81) in order to raise both nets (3) from the ground.

In order to prevent the pots (1) from overturning, the lower net must be positioned at about 5 cm from the ground; in other words, said base must raise the lower net by at least approximately 5 cm.

Referring to Figs. 3, 4A, 4B, 4C, 5A, 5B, and 5C, said fixing means are provided on an end sleeve (12), having a first section (12a) inserted inside the tubular body (81) and a second section (12b) with longitudinal notches (91,92).

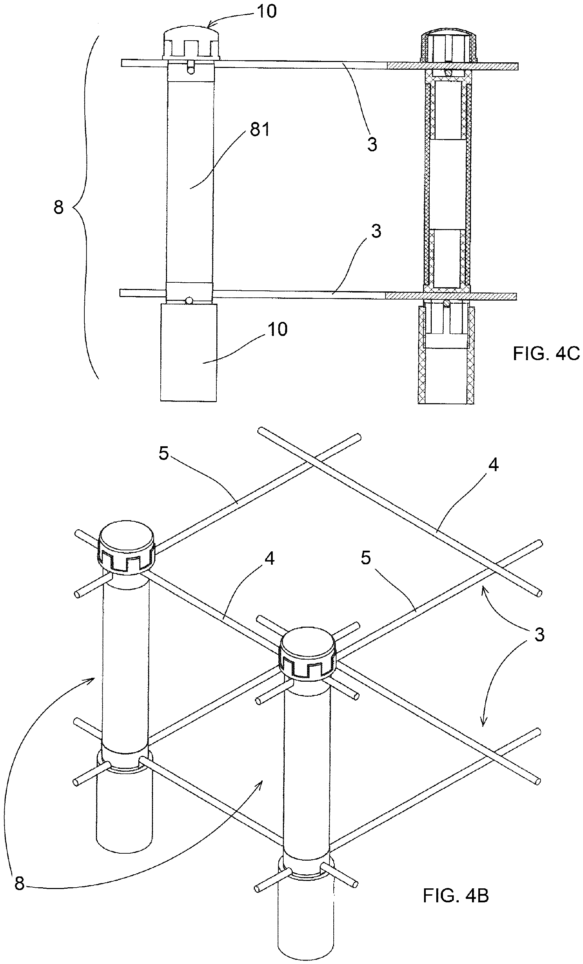

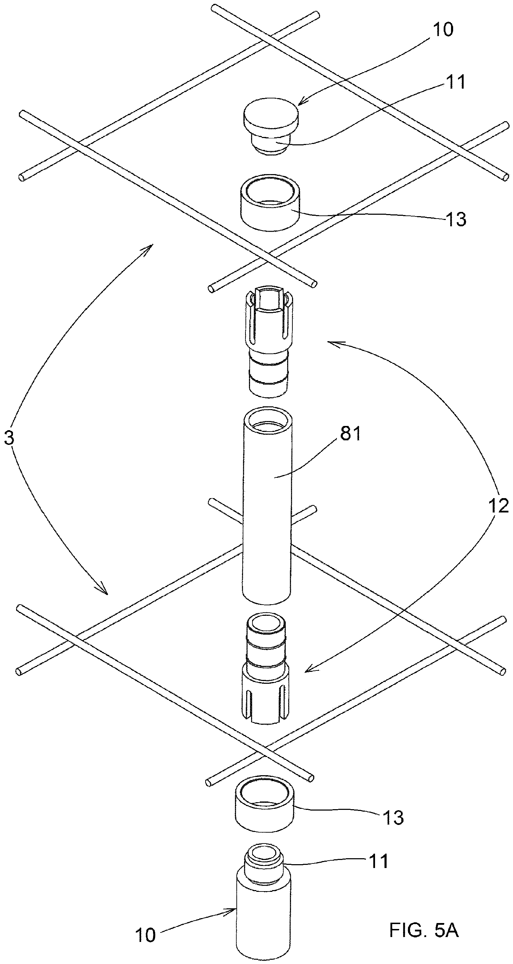

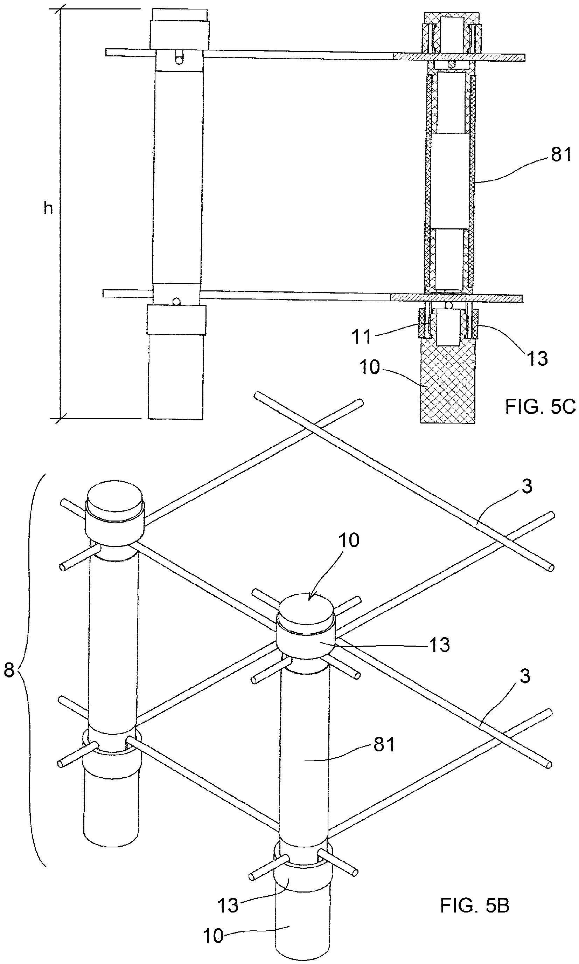

Still referring to the same figures, the cap (10) is provided with collar (11) inserted inside or outside said second section (12b) of the sleeve (12); more precisely, in Figs. 3, 4A, 4B, 4C, said collar (11) is inserted outside said second section (12b) of the sleeve (12), whereas in Figs. 5A, 5B, and 5C, said collar (11) is inserted inside it.

As shown in Figs. 5A, 5B, and 5C, the fixing means also comprise a ring (13) inserted outside the same end (82,83) where the collar (11) of the cap (10) is inserted.

The coupling between cap (10) and second section (12b) of the sleeve (12) can be of snap-in or threaded type.

Referring to Figs. 6, 7, 8, 9, 10 and 11, said collar (11) of the cap (10) is provided with mouth (11 a) where two pairs of opposite longitudinal notches (11b,11c) are obtained and aligned with two pairs of opposite longitudinal notches (91,92).

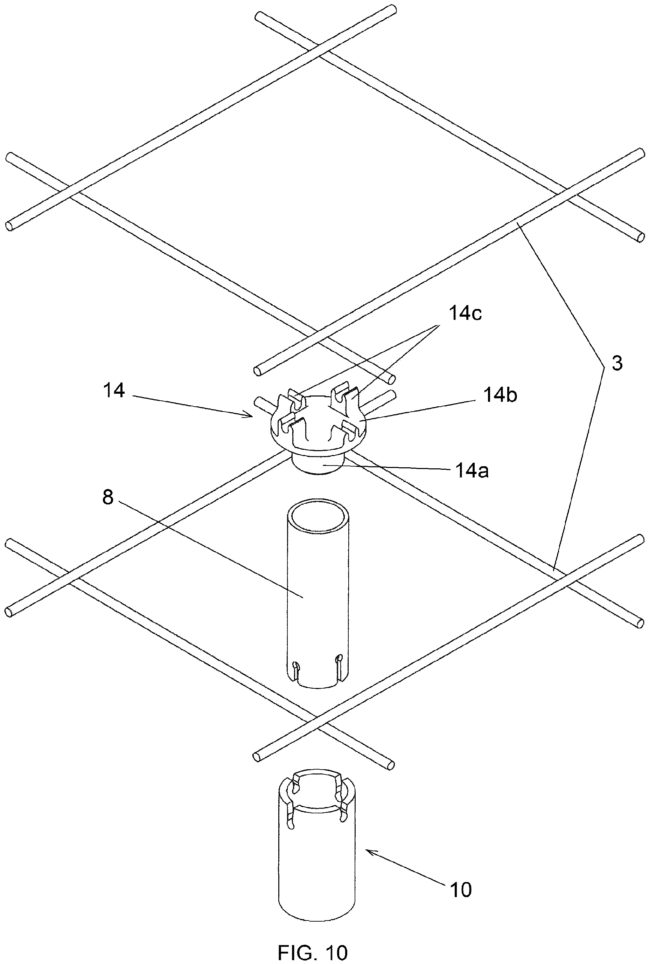

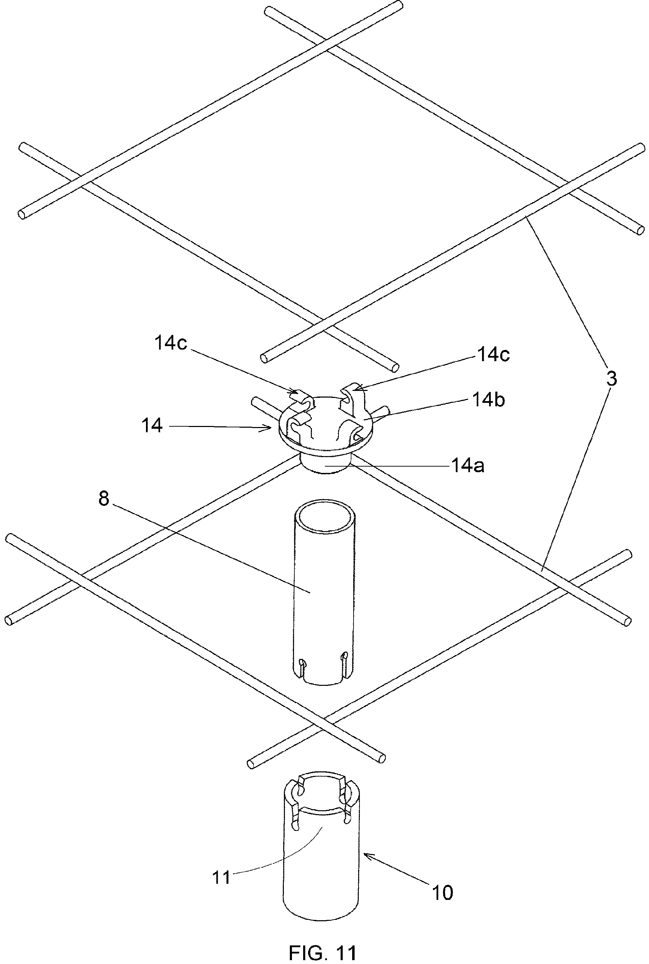

Figs. 10 and 11 shows the apparatus of the invention provided with special fixing means, consisting in a knob (14) with:
- a base (14a) inserted inside the tubular body (81);
- a head (14b) protruding outside of the tubular body (81), from which U or C-shaped clamps (14c) protrude, inside which the wires (41,51) of the net (3) are inserted.

## Claims

1. Apparatus for plant cultivation comprising:
- at least one pot (1) adapted to contain a plant (2); said pot (1) having maximum horizontal length (D) and height (H);
- a first quadrangular-meshed net (3), which is provided with a first series (4) of parallel wires (41) and a second series (5) of parallel wires (51) intersecting with the wires (41) of the first series (4), in such manner to define a series of meshes (7) and a series of intersecting points (6) between the wires (41,51) of the two series (4,5); said pot (1) being inserted into a mesh (7) of said quadrangular-meshed net (3);
- at least three feet (8) adapted to support said first quadrangular-meshed net (3);
apparatus **characterized by** the fact that each foot (8) is provided with:
- a tubular body (81) with lower end (82) and upper end (83); said foot (8) having height (h) lower than the height (H) of the pot (1);
- first fixing means situated at the upper end (83) of said tubular body (81) and fixed to the quadrangular-meshed net (3) in correspondence of one of the intersection points (6).

2. Apparatus according to claim 1, **characterized by** the fact that it comprises a second quadrangular-meshed net (3) parallel to the first net (3) and by the fact that each foot (8) is provided with second fixing means in correspondence of the lower end (82) of said tubular body (81) and fixed to the second quadrangular meshed-net (3) in correspondence of one of the intersection points (6).

3. Apparatus according to one of the preceding claims, **characterized by** the fact that said fixing means consist in two opposite pairs of longitudinal notches (91,92) in which a wire (41,51) of the first (4) or second series (5) of wires of the net (3) is inserted.

4. Apparatus according to claim 3, **characterized by** the fact that said longitudinal notches (91,92) have a first low-thickness section (91 a,92a) with width lower than the diameter of the wire (41,51), and a second section (91 b,92b) adapted to exactly receive the wire (41,51).

5. Apparatus as claimed in one of the preceding claims, **characterized by** the fact that said fixing means also comprise a cap (10) with collar (11) inserted inside or outside the upper or lower end (82,81) of the tubular body (81).

6. Apparatus as claimed in claim 3 and 4, **characterized by** the fact that said fixing means are provided on an end sleeve (12), having a first section (12a) inserted inside the tubular body (81) and a second section (12b) with longitudinal notches (91,92).

7. Apparatus as claimed in the preceding claim, **characterized by** the fact that said fixing means comprise a cap (10) with collar (11) inserted inside or outside said second section (12b) of the sleeve (12).

8. Apparatus as claimed in the preceding claim, **characterized by** the fact that both collar (11) and second section (12b) of the sleeve are respectively threaded.

9. Apparatus as claimed in claim 5 o 7, **characterized by** the fact that said collar (11) of the cap (10) is provided with mouth (11 a) where two pairs of opposite longitudinal notches (11b,11c) are obtained and aligned with two pairs of opposite longitudinal notches (91,92).

10. Apparatus as claimed in claim 5, **characterized by** the fact that said collar (11) is inserted into the upper or lower end (82,83) of the tubular body (81) and by the fact that said fixing means comprise a ring (13) inserted outside the end (82,83) where the collar (11) of the cap (10) is inserted.

11. Apparatus as claimed in claim 1, **characterized by** the fact that said fixing means consist in a knob (14) provided with:
- a base (14a) inserted inside the tubular body (81);
- a head (14b) protruding outside the tubular body (81), from which U or C-shaped clamps (14c) protrude, inside which the wires (41,51) of the net (3) are inserted.
